# EUROPEAN PATENT APPLICATION

(11) **EP 4 685 392 A1**
(43) Date of publication of application: **28.01.2026**
(21) Application number: 25191538.5
(22) Date of filing: 24.07.2025
(51) Int. Cl.: F21S 43/20, B60R 13/00, G02B 1/04, B60Q 1/28, F21W 104/00

(54) **LAMP MODULE INCLUDING A BIO-POLYCARBONATE RESIN COVER**

(30) Priority: 25.07.2024 US 202418784159
(71) Applicant: PO LIGHTING CZECH s.r.o., 742 42 Senov u Nového Jicína (CZ)
(72) Inventor: ADEMUWAGUN, Ayse, 742 42 Senov u Nového Jicína (CZ); MEISTER, Laurent, 742 42 Senov u Nového Jicína (CZ)
(74) Representative: LLR

(57) **Abstract**

The invention concerns a lamp module to be mounted on a motor vehicle comprising: a housing, a cover defining, with the housing, an inner space, the cover separating the inner space from the surrounding environment, and at least one light source housed within the inner space. The cover is made of one piece and comprises an outer wall comprising an outer surface in contact with said surrounding environment and facing away from the light source. The outer wall is made of translucent bio-polycarbonate resin, and the outer surface is devoid of any coating.

## Description

### Background of the Invention

The invention relates to the domain of the automotive industry, and particularly to a motor vehicle lamp module.

In the past, the focus in automotive technology was on lighting functions and signal light functions. The use of lights as design components and to increase aesthetic appeal is becoming increasingly important in automotive engineering and other technical areas. For example, lights are used as design objects in car body parts.

The actual usage in industry is to produce lamp modules outer covers, which can serve as lenses, in polymethyl methacrylate (PMMA) or polycarbonate (PC).

PC is usually favored for its mechanical properties, mainly shock resistance, compared to PMMA which is more britlle and has less thermal resistance and impact strength, making it less suitable for lamp modules. However, PC has several limitations such as limited resistance to ultraviolet light (UV) and abrasion, such as scratches, and a lower light transmition.

To solve such problems, a layer of lacquer, varnish or ultraviolet UV-resistant material is usually applied to the external surface of the PC cover, or hardcoat. However, this is turn generates other disadvantages. In particular, hard coated PC is not an optimum material for recycling. In fact, if raw polycarbonate can be regrained and re-used, hard coated PC will also contain particles of hard coating varnish that will degrade regrained raw material properties. Moreover, this creates an additional step in the manufacturing of the cover.

There is therefore a need to provide a vehicle lamp module cover that is both less complex to manufacture and can be recycled more easily, for example using different materials.

It is known from German Patent Publication No. DE102021119768 (A1), published February 2, 2023 in the name of Osram Continental GmbH and Rehau Automotive SE & CO KG, to manufacture a lamp module lens including a light guide 60, which could be made from bio-polycarbonate resin, for example the material known under the name DURABIO (registered trademark of Mitsubishi Chemical Performance Polymers). In this document, a layer of transparent hardcoat and/or a transparent polyurethane (PU) protective layer is applied on the light guide as a UV protective layer.

It is also known from U.S. Patent Application No. US20180231206 A1, published August 16, 2018 in the name of Hara et al. and entitled "Lamp Device", to manufacture a lamp module lens having a first region made of PC and a second, smaller region, made of materials having a higher weather resistance. However, this document teaches that it is undesirable to manufacture the entire lamp module lens in a material having higher weather resistance compared to polycarbonate, as various problems would have to be considered.

Both solutions make the lamp module more easily recyclable, but still involve many manufacturing steps such as adding a layer of resin or making the lamp module cover in several parts of different materials.

### Brief Summary of the Invention

The invention therefore aims to provide a vehicle lamp module cover that is both less complex to manufacture and can be recycled more easily.

To that end, the invention concerns a lamp module to be mounted on a motor vehicle comprising: a housing, a cover defining, with the housing, an inner space, the cover separating the inner space from the surrounding environment, and at least one light source housed within the inner space, wherein the cover is made of one piece and comprises an outer wall comprising an outer surface in contact with said surrounding environment and facing away from the light source, said outer wall being made of translucent bio-polycarbonate resin, and said outer surface being devoid of any coating.

The inventors have discovered that bio-polycarbonate resin does not require hard coating as it will pass abrasion tests, weather resistance tests, and has a similar light transmission to PMMA. In addition, unlike what was expected, this material has a high enough impact strength to withstand the shocks that a lamp module could receive. For example, the inventors have discovered that under a Charpy impact strength of 7 kJ/m² under ISO regulation 1791-1/1eA, a bio-polycarbonate resin does not break.

The invention allows to remove the step of applying a layer of coating, or providing a cover having two parts made of two different materials. The lamp module therefore is easier to manufacture. Moreover, the vehicle lamp module according to the invention therefore contributes to reaching net-zero targets as it has a higher recyclability and uses a bio-sourced material.

In the present disclosure, an element is said to be translucent when it allows light to pass through it in the visible range, but does not allow objects behind it to be clearly distinguished, and has a transmittance of at least 50%.

Preferably, to improve the bio-sourcing and recyclability, the bio-polycarbonate resin is 40% bio-based.

Preferably, the cover comprises an inner wall, overmolded on the outer wall and facing the light source, made of an opaque material. This allows to produce various lighting effects.

According to a preferred embodiment, the inner wall member is made of polycarbonate, or bio-polycarbonate resin.

Preferably, in order to obtain different lighting or styling effects, the inner wall comprises a plurality of recesses.

For example, the recesses form a pattern or a logo.

According to a preferred embodiment, the outer wall has a lens function.

According to a preferred embodiment, to obtain a visual effect, the side of the cover facing the inner space is coated with a metal layer.

Preferably, the metal layer is made of aluminum or an aluminum-based alloy.

According to a particular embodiment, to obtain different visual or lighting effects, the metal layer is etched by laser ablation to form a pattern or a logo.

According to a preferred embodiment the lamp is a front lamp or a rear lamp.

The invention also concerns a method for manufacturing a lamp module cover comprising the following steps, in this order: injecting a layer of translucent bio-polycarbonate resin in a mold, injecting, atop the layer of bio-polycarbonate resin, a layer of opaque polycarbonate, applying, atop the layer of opaque polycarbonate, a metal layer, for example using aluminum or an aluminum-based alloy, and etching, for example using a laser, at least a part of the metallized layer.

According to a preferred embodiment, the layer of opaque polycarbonate is applied so as to include a plurality of recesses, such that portions of the layer of bio-polycarbonate resin are not covered by the layer of opaque polycarbonate.

Advantageously, the metal layer is applied atop the layer of opaque polycarbonate and atop the portions of the layer of translucent bio-polycarbonate which are not covered by the layer of opaque polycarbonate due to the recesses.

The invention also concerns a method for manufacturing a lamp module comprising a cover obtained according to the method according to the invention, wherein it includes a step of welding a housing to the lamp module cover, for example by laser welding.

### Brief description of the Figures

The invention will be better understood upon reading the following description, which is given only as an example and is made with reference to the attached drawings in which:
Figure 1 is a front view of a schematic representation of a car including a lamp module according to a particular embodiment of the invention,
Figure 2 is a cross-section of the lamp module of Figure 1 along plane II-II,
Figure 3 is a front view of the lamp module of Figure 1.

### Detailed Description of the Invention

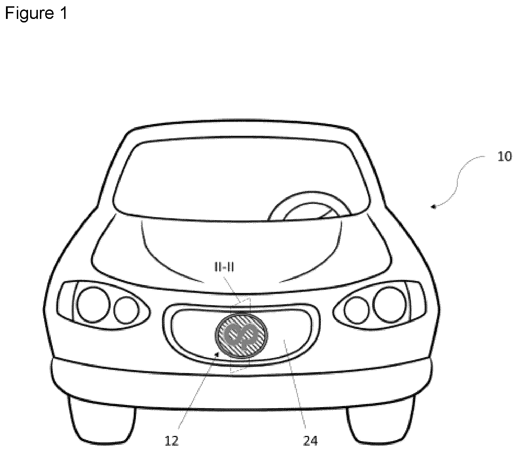

Figure 1 illustrates a motor vehicle 10 comprising a lamp module 12 that is mounted on said motor vehicle 10, which is in this particular case is a car.

Here, as can be seen on Figure 1, the lamp module 12 is a front lamp. However, in other embodiments (not shown), the lamp module 12 could be a rear lamp, a signal lamp or a rook marker lamp.

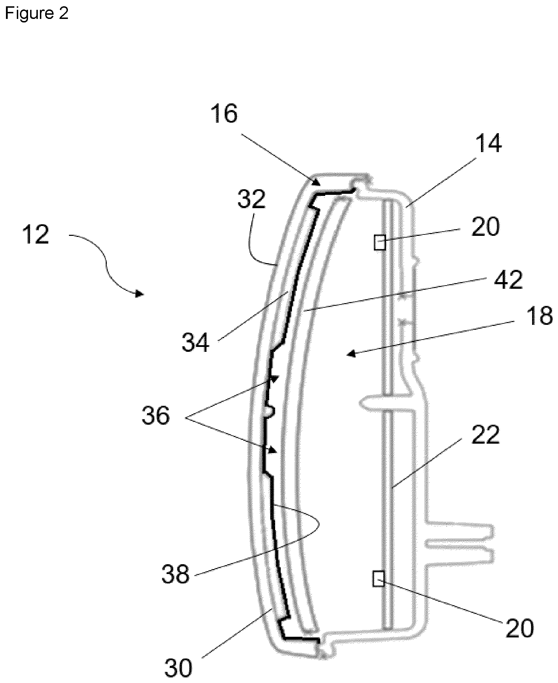

Referring to Figure 2, the lamp module 12 comprises a housing 14 and a cover 16 defining, with the housing 14, an inner space 18.

The cover 16 separates the inner space 18 from the surrounding environment. In the present case, the surrounding environment is the direct surrounding environment of the car 10, i.e. the light and weather conditions to which the car 10 is subjected.

At least one light source 20 is housed within inner space 18. Here, several light sources 20 are housed within inner space 18. They are preferably light-emitting diodes (LEDs) or organic light-emitting diodes (OLEDs). The light sources 20, especially when they are LEDs or OLEDs, are disposed on a printed circuit board 22 (PCB).

The cover 16 can form at least a section or a substantial section of the outer bodywork panel 24 of the car 10. Preferably, the cover 16 is designed as a surface body or as a plate-shaped or disc-shaped panel. For example, it has a homogeneous thickness.

The cover 16 is made of one piece and comprises an outer wall 30 comprising an outer surface 32 in contact with said surrounding environment and facing away from the light sources 20.

The outer wall 30 is made of translucent bio-polycarbonate resin. Preferably, to improve the bio-sourcing and recyclability, the bio-polycarbonate resin is 40% bio-based.

In the present disclosure, an element is said to be translucent when it allows light to pass through it in the visible range, but does not allow objects behind it to be clearly distinguished, and has a transmittance of at least 50%.

In this particular embodiment, the outer wall 30 has a lens function.

The outer surface 32 of the outer wall of the translucent cover 16 is devoid of any coating. In other words, the outer surface 32 of the translucent cover 16 is in direct contact with the surrounding environment and weather conditions.

In this particular embodiment, the cover 16 also comprises an inner wall 34, overmolded on the outer wall 30 and facing the light sources 20.

The inner wall 34 is made of an opaque material. In the present disclosure, an opaque material is one that does not allow light to pass through it, and has a transmittance of 0%.

Preferably, the inner wall 34 is made of opaque polycarbonate, or bio-polycarbonate resin. Preferably, to improve the bio-sourcing and recyclability, the bio-polycarbonate resin is 40% bio-based.

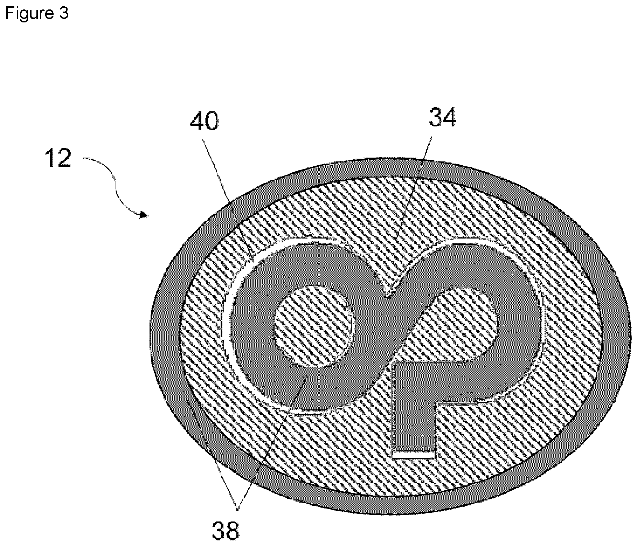

The inner wall 34 here comprises a plurality of recesses 36 to obtain different visual or lighting effects. In this particular example, the recesses 36 form a pattern or a logo. As can be seen on Figure 3, the recesses 36 form a logo in the shape of the letters "OP¨", as well as an oval border.

The recesses 36 are through-holes, such that within the recesses 36, no material constituting the inner wall 34 remains. The inner side of the cover 16 facing the inner space 18, which in this example faces the light sources 20, is coated with a metal layer 38.

In this example, the metal layer 38 is applied on both the side of the inner wall 34 that faces the light sources 20 and the side of the outer wall 30 that faces the light sources 20 which is not covered by the inner wall 34, i.e. the portions of the outer wall facing the recesses 36. In other words, the recesses 36 are filled with the metal layer 38. Hence, as can be seen on Figure 3, a user facing the lamp module 12 may see the logo "OP" and the border which are metallized, distinguishing from the opaque material of the inner wall 34.

Preferably, the metal layer 38 is made of aluminum or an aluminum-based alloy.

Optionally, the metal layer 38 also includes recesses 40, which can be obtained for example by laser etching. The recesses 40 can also form a pattern or logo. As can be seen on Figure 3, the recesses 40 form an outline of the "OP" shaped logo that is slightly offset from the logo formed by recesses 36.

Preferably, the recesses 40 are through-holes, such that within the recesses 40, no material constituting the metal layer 38 remains.

More particularly, the recesses 40 are performed in the portion of the metal layer 38 that is filling the recesses 36.

Thanks to the presence of the recesses 40 within the material layer 38, light can be transmitted directly from the light sources 20 towards the outer wall 30, since no material at all remains in the recesses 40, nor the material of the inner wall 34, nor of the metal layer 38.

As a consequence, when the light sources 20 are on, considering outer wall 30 is translucent, a user sees the illuminated logo or pattern formed by the recesses 40 formed in the metal layer 38. Here, as can be seen on Figure 3, the recesses 40 form an outline of the "OP" logo.

This allows to obtain a different effect during the day, where the metal layer 38 is visible through the recesses 36 made in the inner wall 34, and the night, where the light emitted by the light sources 20 is visible through the recesses 40 formed in the metal layer 38.

Optionally, the lamp module 12 also includes within the inner space 18, for example between the cover 16 and the light sources 20, a filter or an additional lens 42. The cover 16 is preferably welded to the housing 14, for example by laser welding. To that end, housing 14 is made of a compatible material with bio-polycarbonate resin, such as, for example, polycarbonate (PC) resin, acrylonitrile butadiene styrene (ABS), PC-ABS, acrylic-styrene-acrylate (ASA), PC-ASA. Other materials can be considered as long as they are compatible with bio-polycarbonate resin.

The lamp module cover 12 can be manufactured through the following steps, in this order: injecting a layer of translucent bio-polycarbonate resin in a mold, injecting, atop the layer of bio-polycarbonate resin, of a layer of opaque polycarbonate, metallizing the layer of opaque polycarbonate, for example with aluminum or an aluminum-based alloy, to create a metalized layer atop the layer of opaque polycarbonate, etching, for example using a laser, at least a part of the metallized layer, and welding the housing 14 to the lamp module cover 16, for example by laser welding.

Preferably, the layer of opaque polycarbonate that is applied includes a plurality of recesses 36, such that portions of the layer of bio-polycarbonate resin are not covered by the layer of opaque polycarbonate.

Preferably, the metal layer is applied atop the layer of opaque polycarbonate and atop the portions of the layer of translucent bio-polycarbonate which are not covered by the layer of opaque polycarbonate due to the recesses 36.

The invention is not limited to the presented embodiments and other embodiments will clearly appear to the skilled person. Any combination of the aforementioned embodiments or variants is for example explicitly envisioned.

### References list:

- 10 :: Car
- 12 :: Lamp module
- 14 :: Housing
- 16 :: Cover
- 18 :: Inner space
- 20 :: Light sources
- 22 :: PCB
- 24 :: Bodywork panel
- 30 :: Outer wall of the cover
- 32 :: Outer surface of the outer wall
- 34 :: Inner wall
- 36 :: Recesses of the inner wall
- 38 :: Metal layer
- 40 :: Recesses of the metal layer
- 42 :: Additional lens

## Claims

1. A lamp module (12) to be mounted on a motor vehicle comprising:
- a housing (14),
- a cover (16) defining, with the housing (14), an inner space, the cover (16) separating the inner space (18) from the surrounding environment, and
- at least one light source (20) housed within the inner space (18),
wherein the cover (16) is made of one piece and comprises an outer wall (30) comprising an outer surface (32) in contact with said surrounding environment and facing away from the light source (20), said outer (30) wall being made of translucent bio-polycarbonate resin, and said outer surface (32) being devoid of any coating.

2. The lamp module (12) according to claim 1, wherein the bio-polycarbonate resin is 40% bio-based.

3. The lamp module (12) according to claim 1 or 2, wherein the cover (16) comprises an inner wall (34), overmolded on the outer wall (30) and facing the light source (20), made of an opaque material.

4. The lamp module (12) according to claim 3, wherein the inner wall (34) is made of polycarbonate, or bio-polycarbonate resin.

5. The lamp module (12) according to claim 3 or 4, wherein the inner wall (34) comprises a plurality of recesses (36).

6. The lamp module (12) according to claim 5, wherein the recesses (36) form a pattern or a logo.

7. The lamp module (12) according to any one of the preceding claims, wherein the outer wall (30) has a lens function.

8. The lamp module (12) according to any one of the preceding claims, wherein the cover (30) comprises a side facing the inner space, the side being coated with a metal layer.

9. The lamp module (12) according to claim 8, wherein the metal layer is made of aluminum or an aluminum-based alloy.

10. The lamp module (12) according to claim 8 or 9, wherein the metal layer (38) is etched by laser ablation to form a logo or pattern.

11. The lamp module (12) according to any one of the preceding claims, wherein the lamp module (12) is a front lamp, a rear lamp, a signal lamp or a roof marker lamp.

12. A method for manufacturing a lamp module (12) cover comprising the following steps, in this order :
- injecting a layer of translucent bio-polycarbonate resin in a mold;
- injecting, atop the layer of bio-polycarbonate resin, of a layer of opaque polycarbonate;
- applying, atop the layer of opaque polycarbonate, a metal layer, for example using aluminum or an aluminum-based alloy; and
- etching, for example using a laser, at least a part of the metal layer.

13. The method for manufacturing a lamp module (12) cover according to claim 12, wherein the layer of opaque polycarbonate is applied so as to include a plurality of recesses, such that portions of the layer of bio-polycarbonate resin are not covered by the layer of opaque polycarbonate.

14. The method for manufacturing a lamp module (12) cover according to claim 12 or 13, wherein the metal layer is applied atop the layer of opaque polycarbonate and atop the portions of the layer of translucent bio-polycarbonate which are not covered by the layer of opaque polycarbonate due to the recesses.

15. A method for manufacturing a lamp module (12) comprising a cover obtained according to any one of claims 12 to 14, wherein the method for manufacturing a lamp module (12) includes a step of welding a housing to the lamp module cover, for example by laser welding.
